# EUROPEAN PATENT SPECIFICATION

(11) **EP 3 322 850 B1**
(45) Date of publication and mention of the grant of the patent: **07.05.2025**
(21) Application number: 16825234.4
(22) Date of filing: 15.07.2016
(51) Int. Cl.: D21C 5/02, D21C 9/02, D06B 3/10, D21B 1/32

(54) **METHOD FOR CLEAN FIBER RECOVERY FROM CONTAMINATED ARTICLES INVOLVING THE ADDITION OF MAGNETIC PARTICLES**
VERFAHREN ZUR RÜCKGEWINNUNG SAUBERER FASERN AUS VERUNREINIGTEN ARTIKELN MITHILFE DER ZUGABE VON MAGNETISCHEN PARTIKELN
PROCÉDÉ D'EXTRACTION DE FIBRE PROPRE À PARTIR D'ARTICLES CONTAMINÉS IMPLIQUANT L'AJOUT DE PARTICULES MAGNÉTIQUES

(30) Priority: 15.07.2015 US 201562192757 P
(43) Date of publication of application: 23.05.2018
(73) Proprietor: Kimberly-Clark Worldwide, Inc., Neenah, Wisconsin 54956 (US)
(72) Inventor: YANG, Kaiyuan, Cumming, Georgia 30040 (US); RAVAL, Udaykumar, Cumming, Georgia 30041 (US); DU, Xiaotang T., Atlanta, Georgia 30318 (US); QUINONES SILVA, Vladimir, Alpharetta, Georgia 30009 (US)
(74) Representative: Dehns
(86) International application number: PCT/US2016/042425
(87) International publication number: WO 2017/011726

(56) References cited:
- EP-A1- 1 217 121
- CA-A1- 2 328 259
- CN-A- 101 736 635
- KR-A- 19980 076 848
- US-A- 4 176 054
- US-A- 5 527 426
- US-A- 5 538 594
- US-A- 5 542 985
- US-A- 5 639 346
- US-A- 5 685 952
- US-A1- 2001 006 098
- US-A1- 2002 096 269
- US-A1- 2009 120 596

## Description

### TECHNICAL FIELD

The present disclosure relates generally to a method cleaning fibers of contaminated articles.

### BACKGROUND OF THE DISCLOSURE

Disposable wipes or wipers are often used in place of durable cloths in a variety of cleaning situations and can provide cost advantages over durable cloths. In industrial cleaning settings, disposable wipers are commonly used to clean equipment, machinery, parts, and work surfaces and in the process, may come in contact with and accumulate materials such as industrial oil, solvents, and grease, among others. In such a setting, disposable wipers can provide multiple benefits over durable wipes. For example, disposable wipers can provide a convenience advantage over durable cloths in that the disposable wipers need not be re-washed or decontaminated, whereas durable cloths need to be collected and then sent to traditional cleaning sites for washing and decontamination. Because the durable cleansing clothes often have a variety of contaminates with very different chemical and physical properties, it is difficult to provide a single cleaning method or procedure that can effectively remove all of the contaminates, which can leave some contaminates on the cleansing cloths. Additionally, disposable wipers provide the benefits of providing fresh and soft wiper surfaces for each use, avoiding metal accumulation after repeated uses, and providing potential cost advantages over durable cloths.

However, one obstacle of using disposable wipers in place of durable cloths is that the disposable wipers are typically discarded after becoming soiled and if the wipers contain designated hazardous materials, the disposable wipers must be handled properly in compliance with federal and state hazardous waste regulations. The handling that may be required can include several processing steps such as the collection, storage, and transportation of used wipers. These steps can minimize the benefits and advantages of using disposable wipers over durable cleansing cloths.

Thus, there is a desire for a method for cleaning fibers and/or filaments from contaminated articles, such as disposable wipers, such that the fibers can be recycled instead of being treated and disposed of as solid waste. There is also a desire for a method of recycling fibers and/or filaments from contaminated articles such that the fibers and/or filaments can be reused to manufacture new articles.

Methods for using magnetic separation to deink and remove "stickies" from recycled paper pulp are described by US Patent No. 5,639,346 and Canadian Patent Application No. 2,328,259 A1. Chinese Patent No. 101,736,635 relates to a magnetic separation and deinking method for waste paper.

### SUMMARY OF THE DISCLOSURE

The present invention provides a method for cleaning fibers from a contaminated article as stated in claim 1.

The present invention provides a method for cleaning fibers from a contaminated article as stated in claim 2.

### BRIEF DESCRIPTION OF DRAWINGS

A full and enabling disclosure thereof, directed to one of ordinary skill in the art, is set forth more particularly in the remainder of the specification, which makes reference to the appended figures in which:
FIG. 1 is a process schematic providing an exemplary embodiment of a method for cleaning fibers from a contaminated article as described herein.
FIG. 2A is a perspective view illustrating an exemplary embodiment of submerging a magnet in a suspension including dissociated pulped fibers, magnetic particles, and contaminates to apply a magnetic field to the suspension.
FIG. 2B is a perspective view illustrating the magnet of FIG. 2A being removed from the suspension for removing magnetic particles and the contaminates from the suspension.
FIG. 3 is a graph illustrating the accumulative removal amount of oil, grease, and magnetic particles versus time for four different concentrations of magnetic particles being added to wipers.
FIG. 4 is a graph illustrating the accumulative removal amount of oil, grease, and magnetic particles versus time for three different concentrations of magnetic particles being added to a solution.
FIG. 5 is a graph illustrating the accumulative removal amount of oil, grease, and magnetic particles versus time comparing a wiper in a solution with magnetic particles added to the solution and a wiper in a solution with magnetic particles added to the wiper for 10 ppm of two different magnetic particles.
FIG. 6 is a graph illustrating the accumulative removal amount of oil, grease, and magnetic particles versus time comparing a wiper in a solution with magnetic particles added to the solution and a wiper in a solution with magnetic particles added to the wiper for 30 ppm of two different magnetic particles.
FIG. 7 is a graph illustrating the accumulative removal amount of oil, grease, and magnetic particles versus time comparing a wiper in a solution with magnetic particles added to the solution and a wiper in a solution with magnetic particles added to the wiper for 50 ppm of two different magnetic particles.
FIG. 8 is a graph illustrating the accumulative removal amount of oil, grease, and magnetic particles versus time comparing a wiper including 80% pulp and 20% polypropylene and a wiper including 100% pulp, each of the wipers including added magnetic particles.
FIG. 9 is a graph illustrating the accumulative removal amount of oil, grease, and magnetic particles versus time comparing a wiper placed in fresh oil and a wiper placed in used oil, each of the wipers including added magnetic particles.
FIG. 10 is a process schematic providing an alternative embodiment of cleaning fibers from a contaminated article.

Repeat use of reference characters in the present specification and drawings is intended to represent the same or analogous features or elements of the disclosure.

### DETAILED DESCRIPTION OF THE DISLOSURE

In an embodiment, the present disclosure is generally directed towards a method for cleaning fibers from a contaminated article involving the addition of magnetic particles. Each example is provided by way of explanation and is not meant as a limitation. For example, features illustrated or described as part of one embodiment or figure can be used on another embodiment or figure to yield yet another embodiment. It is intended that the present disclosure include such modifications and variations.

When introducing elements of the present disclosure or the preferred embodiment(s) thereof, the articles "a", "an", "the" and "said" are intended to mean that there are one or more of the elements. The terms "comprising", "including" and "having" are intended to be inclusive and mean that there may be additional elements other than the listed elements. Many modifications and variations of the present disclosure can be made without departing from the spirit and scope thereof. Therefore, the exemplary embodiments described above should not be used to limit the scope of the invention.

### Definitions:

The term "contaminates" refers herein to solids and fluids, both organic and inorganic that can be absorbed, adsorbed, or contained by an article. Exemplary contaminates can include, but are not limited to, pure metals and alloys, which can be in the form of particles from metallic surfaces; hybrid inorganic and organic composites and mixtures, such as greases, lubricants and surface coatings; inorganic materials, such as metal halides, sulfates, carbonates, hydroxides, sulfides, metal oxides, organometallics, ceramics; and organic materials, such as liquid organic solvents, oils, and grease without lubricants.

The term "hydrophilic" refers herein to fibers or the surfaces of fibers which are wetted by aqueous liquids in contact with the fibers. The degree of wetting of the materials can, in turn, be described in terms of the contact angles and the surface tensions of the liquids and materials involved. Equipment and techniques suitable for measuring the wettability of particular fiber materials or blends of fiber materials can be provided by Cahn SFA-222 Surface Force Analyzer System, or a substantially equivalent system. When measured with this system, fibers having contact angles less than 90 are designated "wettable" or hydrophilic, and fibers having contact angles greater than 90 are designated "nonwettable" or hydrophobic.

The term "meltblown" refers herein to fibers formed by extruding a molten thermoplastic material through a plurality of fine, usually circular, die capillaries as molten threads or filaments into converging high velocity heated gas (e.g., air) streams which attenuate the filaments of molten thermoplastic material to reduce their diameter, which can be a microfiber diameter. Thereafter, the meltblown fibers are carried by the high velocity gas stream and are deposited on a collecting surface to form a web of randomly dispersed meltblown fibers. Such a process is disclosed, for example, in U.S. Patent No. 3,849,241 to Butin et al., which is incorporated herein by reference. Meltblown fibers are microfibers which may be continuous or discontinuous, are generally smaller than about 0.6 denier, and may be tacky and self-bonding when deposited onto a collecting surface.

The term "nonwoven" refers herein to materials and webs of material which are formed without the aid of a textile weaving or knitting process. The materials and webs of materials can have a structure of individual fibers, filaments, or threads (collectively referred to as "fibers") which can be interlaid, but not in an identifiable manner as in a knitted fabric. Nonwoven materials or webs can be formed from many processes such as, but not limited to, meltblowing processes, spunbonding processes, carded web processes, etc.

The term "spunbond" refers herein to small diameter fibers which are formed by extruding molten thermoplastic material as filaments from a plurality of fine capillaries of a spinnerette having a circular or other configuration, with the diameter of the extruded filaments then being rapidly reduced by a conventional process such as, for example, eductive drawing, and processes that are described in U.S. Patent No. 4,340,563 to Appel et al., U.S. Patent No. 3,692,618 to Dorschner et al., U.S. Patent No. 3,802,817 to Matsuki et al., U.S. Patent Nos. 3,338,992 and 3,341,394 to Kinney, U.S. Patent No. 3,502,763 to Hartmann, U.S. Patent No. 3,502,538 to Peterson, and U.S. Patent No. 3,542,615 to Dobo et al., each of which is incorporated herein in its entirety by reference. Spunbond fibers are generally continuous and often have average deniers larger than about 0.3, and in an embodiment, between about 0.6, 5 and 10 and about 15, 20 and 40. Spunbond fibers are generally not tacky when they are deposited on a collecting surface.

The term "wiper" or "wipe" refers herein to a non-woven or woven article generally used in cleaning or wiping applications. "Wipers" or "wipes" generally include at least some percentage of pulp fibers, but a non-woven or woven article including no pulp fibers can be a "wiper" or "wipe" as used herein. "Wipes" and "wipers" as discussed herein can include fibers and/or filaments other than pulp fibers, including, but not limited to, polypropylene staple fibers or filaments. Exemplary "wipers" or "wipes" include industrial cleaning wipers and paper towels. The term "wiper" can be synonymous with "wipe."

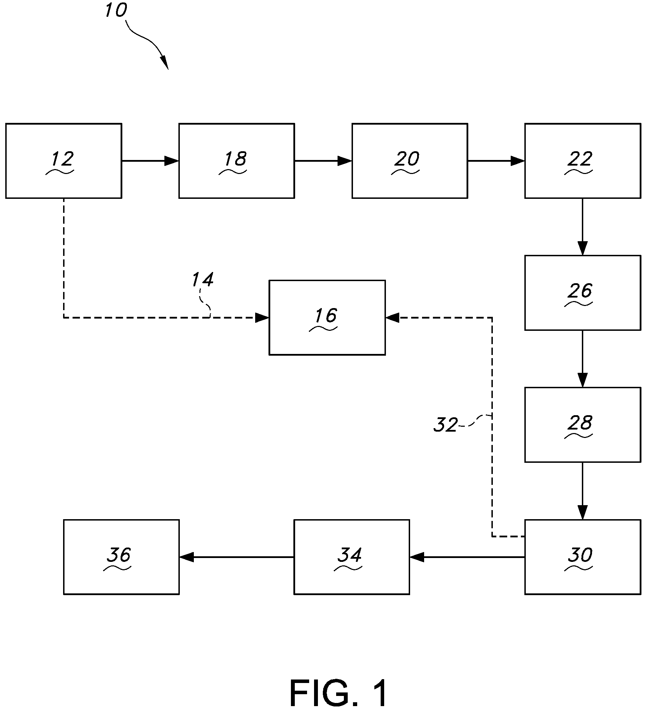

Referring to FIG. 1, an exemplary method 10 for cleaning fibers from a contaminated article is illustrated. The method 10 can include providing a contaminated article comprising contaminates and at least one of fibers and filaments. While the method 10 discussed herein can be conducted for a single wiper, it is preferable to clean fibers from a plurality of contaminated articles simultaneously for efficiency purposes. The method 10 as discussed herein can be conducted on a small scale (e.g., several grams to several hundred grams) or can be scaled up to a commercial operation for cleaning fibers from larger quantities of contaminated articles (e.g., several hundreds of kilograms to several tongs or more). Some of the exemplary discussion provided herein was for testing conducted at a small scale.

In an embodiment, the contaminated article can be a used wiper, or wipe. For example, small scale testing was conducted according to the method 10 using prepared wet-laid handsheets that included about 80-85% pulp fibers and about 15-20% polypropylene staple fibers. This 80-85/15-20 pulp/polypropylene ratio was prepared simulate a sample industrial wiper, such as WypAll* industrial wipers manufactured by Kimberly-Clark Professional. The WypAll* industrial wiper manufactured by Kimberly-Clark Professional include about 80-85% pulp fibers and about 15-20% spunbond polypropylene fibers. The prepared wet-laid handsheets may be referred to as a wiper, or wipe, throughout this disclosure.

Thus, in one embodiment, the method 10 can be utilized for cleaning a non-woven article including pulp fibers and polymer fibers, however, in accordance with the claims the method 10 can also be utilized for cleaning contaminated articles including pulp fibers and polymeric filaments. The prepared wet-laid handsheets include a ratio of pulp fibers to polymeric fibers of about 4, but the method discussed herein can be used to clean contaminated articles including other ratios of pulp fibers to polymeric fibers or filaments. In examples, the method 10 can be used with contaminated articles including about 10-100% pulp fibers and about 0-90% polymeric fibers or filaments, more preferably about 50-100% pulp fibers and about 0-50% polymeric fibers or filaments. Thus, it is contemplated that the contaminated article used in the method 10 discussed herein could include non-woven articles including ratios of pulp fibers to polymeric fibers or filaments of at least about 0.10, more preferably, at least about 0.50, and even more preferably, at least about 1.0. In accordance with the claims the contaminated article is a non-woven article comprising pulp fibers and at least one of polymeric fibers and polymeric filaments.

For the small scale testing conducted for method 10, prepared handsheets were soiled with an oil/grease mixture to test various conditions for method 10. To simulate used industrial wipers, a used oil/grease mixture was made that included about 12.0 grams of used motor oil and about 3.0 grams of Valvoline^{®} Moly-Fortified Multi-Purpose Grease, for an approximate 80/20 ratio of oil/grease. The used motor oil was collected by a motor repair/oil change shop and was used as received. Three prepared handsheets having a total dry weight of approximately 15.0 grams were then soiled with the used oil/grease mixture by first spreading the pre-made used oil/grease mixture onto a clean, stainless steel plate and then the three prepared handsheets were used to wipe off all of the used oil/grease mixture. Each of the three prepared handsheets were exposed to a similar amount of the used oil/grease mixture. After exposure to the used oil/grease mixture, the three prepared handsheets were placed in an open container for at least one hour to allow the settling of the used oil/grease into the handsheets' interior matrices before any small scale testing was conducted with the handsheets using method 10.

The method 10 can include a pre-pulping preparation step 12, in which large pieces of non-wiper related materials (e.g., large metal shavings, wood pieces, machine parts, and other objects) can be separated from contaminated wipers either manually, mechanically, and/or automatically. In some embodiments, the pre-pulping preparation step 12 can be a pre-washing of the contaminated articles in which the contaminated article(s) can be placed in a container in a pre-washing solution and agitated. The pre-washing solution can be water. The pre-pulping preparation 12 can provide for some contaminates, such as oils, greases, and organics, to be released and rise to the top of the pre-washing solution, while other contaminates, such as metal shavings, saw dust, inorganics, and dirt can drop to the bottom of the pre-washing solution in the container. While preferred, the pre-pulping preparation 12 of the contaminated article(s) is not necessary to the method 10 described herein. If pre-washing is performed as pre-pulping preparation 12, the excess pre-washing solution 14 used can be directed to a waste-water facility 16 for further processing.

The method 10 can also include adding a plurality of magnetic particles 18. Adding the magnetic particles 18 can be completed by adding the magnetic particles to a solution in which the contaminated articles will be placed. Alternatively or additionally, adding the magnetic particles 18 can be completed by adding the magnetic particles directly to the contaminated article(s). In a first embodiment, the method 10 can include adding a plurality of magnetic particles 18 to a solution, such as water, in which the contaminated articles will be pulped 20 in as part of method 10, which will be further described below. In a second embodiment, the method 10 can include adding a plurality of magnetic particles 18 directly to the contaminated articles before the contaminated articles are pulped 20 in method 10.

Various magnetic particles can be added 18 to the solution or directly to the wipe. For example, in the small scale testing conducted, the magnetic particles added 18 included iron powder, and/or black iron oxide. In some embodiments, magnetically weak lead oxide particles can also be added in addition to iron powder and/or iron oxide particles, which have stronger intrinsic magnetic properties. Adding magnetic particles with strong magnetic susceptibility can function as the "seeds" for the magnetic removal of magnetic particles and/or metal containing contaminates with weak magnetic susceptibility. The "seeds" as used herein can mean that when magnetic particles with strong magnetic susceptibility are in mixed states with other magnetic particles with weak magnetic susceptibility, the magnetic particles with strong magnetic susceptibility will bring at least some of the magnetic particles and/or metal containing contaminates with weak magnetic susceptibility to the magnet surface so that the latter can also be magnetically removed. As used herein, mixed states can mean that they are either physically aggregated together by charge-charge interactions or bound together by the existence of oil and grease. Here, oil and grease, particularly the adhering, or sticky, portions of oil and grease, can effectively function as a binder or a trap to harbor together any metal containing contaminates with varied magnetic susceptibilities. Of course, it is contemplated that other particles/substances exhibiting magnetic behavior other than iron, iron oxide, and lead oxide can be utilized for method 10.

This "seed" functionality was demonstrated by first preparing a three liter water suspension with 50 ppm of iron powder, 50 ppm black iron oxide, and 50 ppm lead oxide and then a six inch bar magnet (as described further below) was placed into the suspension under stirring by an IKA 50-2000 RPM variable speed mixer with a Teflon blade. It was observed that intrinsically magnetically strong particles of iron and iron oxide were quickly pulled to the magnet surface to form black rings and then slowly the intrinsically magnetically weak lead oxide particles coated onto the already formed black iron/iron oxide rings. The black rings iron and iron oxide rings gradually became pinkish to assume the color of lead oxide particles. From this demonstration, it was understood that some very fine magnetically strong iron/iron oxide particles can be absorbed onto lead oxide particles in the suspension and they then will be pulled to magnet's surface, albeit at a much slower speed than iron/iron oxide.

As briefly discussed above, adding the plurality of magnetic particles 18 can be completed by adding the magnetic particles to water. The plurality of magnetic particles 18 can be added to the water in various concentrations, such as 5 parts per million ("ppm"), 10 ppm, 20 ppm, 30 ppm, and 50 ppm. It is contemplated that the plurality of magnetic particles can be added 18 at concentrations outside of these sample concentration levels. In the small scale testing conducted for demonstrating method 10, adding the plurality of magnetic particles 18 was prepared by adding the following amounts of iron powder, black iron oxide, and lead oxide to three liters of water to provide the following concentrations, as shown in Table 1 below. As an example, to provide 5 ppm of iron powder to a solution of three liters of water, 0.015 grams of iron powder are added to three liters of water.

**Table 1**

| | 5ppm | 10ppm | 20ppm | 30ppm | 50ppm |
|---|---|---|---|---|---|
| Iron Powder | 0.015g | 0.03g | 0.06g | 0.09g | 0.15g |
| Black Iron Oxide | 0.015g | 0.03g | 0.06g | 0.09g | 0.15g |
| Lead Oxide | 0.015g | 0.03g | 0.06g | 0.09g | 0.15g |

However, the method 10 can also including adding the magnetic particles 18 directly to the contaminated article(s), or commonly referred to as "spiking" the contaminated article(s). In one embodiment and for purposes of the small scale testing conducted herein, the magnetic particles were added to the oil grease/mixture as described above that was used to simulate the used wipers in order to add the magnetic particles to the three prepared handsheets, the simulated contaminated articles. Of course, it is contemplated that the magnetic particles could be added 18 to the contaminated article(s) in other ways. For example, the magnetic particles can be added 18 to the wipers by dry mixing the wipers with the magnetic particles. Alternatively, the magnetic particles can be added 18 to the wipers during manufacturing of the wipers such as during the extrusion process, or during air-laid or wet-laid processes by adding the dry magnetic particles or placing them in the process water. In yet another alternative, the magnetic particles can be added 18 on to the wipers by printing or spraying a coating formulation containing the magnetic particles.

The method 10 can further include pulping 20 the contaminated article(s). Pulping 20 of the contaminated article(s) can be conducted by placing the contaminated article(s) in a solution, which can be water, and agitating and mixing the contaminated article(s) to separate the fibers from the contaminated article(s) to provide dissociated pulped fibers.

Pulping 20 can be done by utilizing different pulping tools, depending upon the amount of wipers to be pulped, the fibers comprising the contaminated wipers (e.g., short fibers or continuous fibers), and the manufacturing methods involved (e.g. air-laid or wet-laid with latex or wet strength enhancers as binders, or hydroentangled or co-formed webs with pulp fibers and continuous filaments, etc.). For wipers with only pulp fibers or wipers with pulp and staple fibers, traditional pulpers commonly used in paper industry such as Hollander types or (or Valley beaters) are preferred. In some cases, simple blenders commonly used in food industry may be sufficient for pulping 20 a small amount of wipers with only pulp and staple synthetic fibers.

In some circumstances, pulping 20 for wipers with continuous filaments (with or without pulp fibers) may not be efficiently pulped by using traditional pulpers used in paper industry as continuous filaments may not be easily broken or cut to short staple fibers. In these instances, special pulpers, such as Tornado types of pulpers, are required to break and/or cut down the continuous filaments to short staple fibers. Tornado pulpers are known to have specially designed motors as well as fiber stretching and cutting mechanisms so that continuous filaments in the wipers can be stretched/cut/pulped.

Although not required by method 10, the solution for pulping 20 can be heated during the pulping 20 of the contaminated article(s), and more particularly, it is preferable to heat the solution to at least about 50°C. Not to be bound by theory, but it is believed that heating the solution for the pulping 20 provided benefits to help relax the fibrous structure matrix and also increase the solubility as well as the dispensability of both organic and inorganic contaminates in the solution. In particular, contaminates article(s) including polymeric fibers (e.g., spunbond polypropylene fibers) can be softened by such heat, and the softening can lead to relaxation of reduction of entanglement among fibers in the article(s).

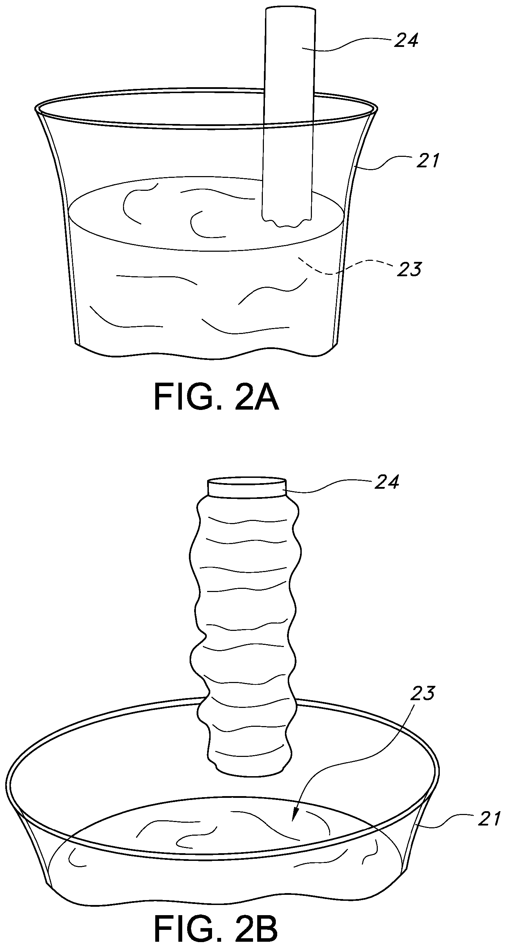

In the small scale testing conducted for method 10, the pulping 20 was performed by adding the three prepared handsheets (weighing approximately 5.0 grams each) to 600 mL of water and blending with a high speed blender, such as a ten speed Oster^{®} Osterizer kitchen blender, at a setting of "liquify", for approximately two minutes. After this blending, the blended mixture was transferred to a five liter beaker 21 (see FIGS. 2A and 2B) equipped with an IKA 50-2000 RPM variable speed mixer with a Teflon blade. Water was added to the five liter beaker 21 such that blended wipes, contaminates, and added magnetic particles provided three liters of such a solution. In such an example, the fiber consistency was approximately 0.5-1.0% and the fiber/oil/grease consistency level was approximately 1.0-2.0%. The blended wipes, contaminates, and added magnetic particles were then stirred with the IKA mixer at 500 RPM for one to two minutes to form a suspension 23 of dissociated pulped fibers, contaminates, and magnetic particles. The pulping 20 of the contaminated article(s) can be conducted in the same manner regardless of how the plurality of magnetic particles are added 18 (either adding the magnetic particles 18 to the solution before, during, or after the pulping 20 or adding the magnetic particles 18 directly in the contaminated article(s)).

The method 10 can also include applying a magnetic field 22 to the suspension 23 of dissociated pulped fibers and the contaminates. Applying the magnetic field 22 to the suspension 23 can occur simultaneously to pulping 20 the contaminated article(s) and/or after the pulping 20 of the contaminated article(s). In a preferred embodiment, the magnetic field is applied 22 to the suspension while the pulping 20 of the contaminated article(s) is being performed to separate the dissociated pulped fibers and the contaminates from the contaminated article(s). In one embodiment, applying the magnetic field 22 can be completed by providing a magnet 24 to be at least partially submerged in the suspension 23, as illustrated in FIG. 2A. In the small scale testing conducted, the magnetic field was applied 22 by dipping the magnet 24 in the beaker until it hit the bottom of the beaker 21. Of course, it is contemplated that the magnetic field could also be generated by providing an electromagnetic field as an alternative to, or in addition to, one or more magnets 24.

Without being bound by theory, it is believed that added magnetic particles 18 preferably interact with oils/grease in a contaminated article during pulping 20. The high viscosity of oil/grease could help to capture or trap the magnetic particles better than fibers. Besides the magnetic particles that are added 18, oils/grease can also capture or trap other inorganics such as metal shavings, ceramics, oxides, and lubricants. In addition, hydrophobic fibers such as pulped staple polypropylene fibers from spunbond can also be trapped and captured into oils/grease because of their strong affinity through hydrophobicity. Additionally, used wipers from industrial cleaning may already have low levels of magnetic metal containing contaminates (generally lower than 1-5 ppm) that can be removed by a magnetic field. Taken collectively, the above described mechanisms will lead to the formation of magnetically attractive aggregates that contain various forms of contaminates and hydrophobic fibers (e.g., oil, grease, magnetic particles, all other metal containing contaminates, and hydrophobic fibers) that can be removed by a magnetic field. It is conceivable that if a sufficient amount of magnetic particles are added 18 in method 10, most contaminates (e.g. up to 90-100%) in the contaminated article(s) can be removed by using a magnetic field alone without involving traditional detergent-based cleaning methods.

As described above, aggregates with all forms of contaminates and magnetic particles can accumulate on the magnet 24 due to the magnetic field being applied 22 to the suspension 23 including the dissociated pulped fibers. This accumulation can also include hydrophobic spunbond fibers, and conceivably some hydrophilic pulp fibers. As the contaminates accumulate on the magnet 24 (either directly to the magnet surface and/or indirectly via hydrophobic fibers or the added magnetic particles 18 that are attracted themselves to the magnets), the magnet 24 can periodically be removed from the suspension 23 such that the contaminates can be removed 26 from the suspension. For example, in the small scale testing conducted, the magnet 24 was removed from the suspension 23 every five minutes such that that the collected contaminates and the added magnetic particles and fibers (which can also include contaminates) (such as illustrated on the magnet 24 in FIG. 2B) can be removed 26. It is not required that the collected contaminates and the added magnetic particles and fibers can be removed 26 in other time intervals and sequences. Of course, it is contemplated that the contaminates, and the added magnetic particles and fibers could be removed 26 from the suspension in other ways, such as by keeping the magnet 24 stationary and draining the suspension 23. This alternative method could also allow access to the magnet 24 to remove the contaminates, added magnetic particles and fibers from the surface of the magnet 24.

In the small scale testing conducted, the collected contaminates, added magnetic particles, and fibers were removed 26 from the magnet 24 by using one or two wipes, such as a Kimwipe manufactured by Kimberly-Clark Professional, to wipe the surface of the magnet 24 clean. These wipes used to remove the collected contaminates, added magnetic particles, and fibers were weighed prior to removing such contaminated, added magnetic particles, and fibers, such that amount of contaminates, magnetic particles, and fibers could be weighed each time the surface of the magnet 24 was wiped clean during the small scale testing. Of course, the collected contaminates, added magnetic particles, and fibers can be removed 26 from the magnet 24 by other means, including, but not limited to, pressurized water jets, pressurized air guns, etc.

In some embodiments, the magnet 24 can be reapplied to the suspension 23 to continue to attract additional contaminates, the added magnetic particles 18, and hydrophobic fibers, which can be removed 26 from the suspension 23 via the same process as just described. In some circumstances, the magnetic field can be applied 22 several times and removed from the suspension 23 several times, until a substantial portion of the plurality of the added magnetic particles and contaminates from the suspension are removed 26. For purposes of data collection in the small scale testing, the collected wet mass wiped from the magnet 24 surface was collected on filter paper, dried at 80°C for about forty-eight hours, and were recorded for efficacy analyses, which will be described further below.

In the small scale testing conducted, the magnet 24 was a rare earth magnet, a six inch long and one inch in diameter neodymium-iron-boron separator bar magnet, available from Amazing Magnets. The magnet 24 included an assembly of multiple individual magnets encased within a stainless steel housing with the individual magnets being placed within the housing with like poles opposing one another. The specifications provide that the surface magnetic field strength provided by the magnet can be at least 11,000 Gauss on at least some parts of the stainless steel tube surface of the magnet.

Of course, it is contemplated that different sizes and types of magnets providing different magnetic field strengths can be used to apply the magnetic field 22 for method 10. It is preferable, however, that the magnetic field strength is at least 5000 Gauss. It is also contemplated that more than one magnetic field could be applied 22 to the suspension 23 of dissociated pulped fibers, for example, by at least partially submerging two or more magnets 24 to the suspension 23 simultaneously. By applying 22 more than one magnet field to the suspension of dissociated pulped fibers, the time required for the method 10 of cleaning the fibers from a contaminated article(s) could be decreased. As mentioned above, it is contemplated that the magnetic field could also be generated by providing an electromagnetic field as an alternative to, or in addition to, one or more magnets 24.

The magnetic field applied by the magnet 24 was measured prior to applying the magnetic field 22 in the method 10 using a Model 1-ST DC Gauss meter made by AlphaLab, Inc., which can measure strength and polarity of magnetic fields up to 19,999.9 Gauss, with a resolution of 0.1 Gauss. As shown in Table 2 below, the strength of the magnetic field can decrease away from the surface of the magnet 24, as seen from the magnetic field strength values measured one inch away from the surface of the magnet 24. Additionally, the strength of the magnetic field can vary along the surface moving between the magnetic poles of the individual magnets within the magnet 24. In the magnet 24 used in the small scale testing, it can be seen from measuring the magnetic field strength that six "rings" of magnetic field strength were created that were greater than 5000 Gauss. Looking at FIG. 2B, these changes in magnetic field strength creating "rings" are depicted in the amount of contaminates, added magnetic particles, and fibers that are attracted to the surface of the magnet 24 as the magnet 24 is lifted from the suspension 23 and the contaminates, magnetic particles, and fibers are removed 26 from the suspension 23. It is preferable to have at least some portion of the magnetic field being applied 22 have a magnetic field strength of at least 5000 Gauss, as the stronger the magnetic field, the more likely the contaminates, added magnetic particles attracted to contaminates, and fibers containing contaminates will be attracted to the magnetic field and stay attached during the removing 26 of such contaminates, particles, and fibers.

**Table 2**

| Measuring Locations along 6" Magnet (In) | Magnetic Field Strength (G) | | Comments |
|---|---|---|---|
| | Magnet Surface | One Inch | |
| 0.00-0.25 | 945 | 163 | |
| 0.25-0.50 | 5475 | 115 | Ring 1 with field strength >5000 G |
| 0.50-0.75 | 1380 | -115 | |
| 0.75-1.00 | -670 | -338 | |
| 1.00-1.25 | -5714 | -482 | Ring 2 with field strength >5000 G |
| 1.25 | -9200 | -462 | |
| 1.25-1.50 | -5440 | -365 | |
| 1.50-1.75 | -1600 | -103 | |
| 1.75-2.00 | -276 | 223 | |
| 2.00-2.25 | 1921 | 394 | |
| 2.25-2.50 | 8500 | 325 | Ring 3 with field strength >5000 G |
| 2.50-2.75 | 1900 | 105 | |
| 2.75-3.00 | 819 | -113 | |
| 3.00-3.25 | -1200 | -332 | |
| 3.25-3.50 | -8800 | -371 | Ring 4 with field strength >5000 G |
| 3.75-4.00 | -1170 | -161 | |
| 4.00-4.25 | 670 | 85 | |
| 4.25-4.50 | 5360 | 394 | Ring 5 with field strength >5000 G |
| 4.50 | 9300 | 350 | |
| 4.50-4.75 | 5800 | 319 | |
| 4.75-5.00 | 1929 | 120 | |
| 5.25-5.50 | -670 | -190 | |
| 5.50-5.75 | -2900 | -210 | |
| 5.75 | -5100 | -160 | Ring 6 with field strength >5000 G |
| 5.75-6.00 | -1700 | -131 | |

The magnet 24 can be set-up as a stationary or mobile fixture. In some circumstances, stationary types may be preferred due to their rigidity and robustness. However, a mobile set-up for the magnet 24 can also have advantages for later stages of contaminate removal. For example, when only a small amount of remaining aggregates of oil/grease/magnetic particles/fibers are floating on the top of the suspension 23, a mobile set-up for the magnet 24 can be advantageous to provide for more contact with the contaminates that are no longer homogenously distributed in the suspension 23.

As illustrated in FIG. 1, the method 10 can also include filtering 28 the dissociated pulped fibers after removing 26 at least some of the plurality of magnetic particles and at least some of the contaminates from the suspension 23. The filtering 28 can be accomplished by running the suspension 23 through a sieve, or any other known filtering equipment. Filtering 28 the dissociated pulped fibers, while preferred, is not a required aspect of the disclosure. Recovered pulped fibers from filtering 28 can be substantially free from any major dark colored oil/grease/magnetic particles.

The method 10 can also include rinsing 30 the dissociated pulped fibers after removing 26 a at least some of the plurality of magnetic particles and at least some of the contaminates from the suspension 23. The rinsing 30 can provide the benefit of removing any contaminates confined in the dissociated pulped fibers that were not removed by filtering 28 or by applying the magnetic field 22 to the suspension 23 and removing 26 the contaminates, magnetic particles, and fibers attracted to the magnetic field 22 as discussed above. As illustrated in FIG. 1, the rinsing solution 32 can be transferred to a waste-water facility 16 for further processing after rinsing the dissociated pulped fibers. In some embodiments, it may be preferable to perform the rinsing 30 several times.

The method 10 can include drying 34 the dissociated pulped fibers after removing 26 at least some of the plurality of magnetic particles and at least some of the contaminates from the suspension 23. As illustrated in FIG. 1, in some embodiments, the drying 34 of the dissociated pulped fibers can occur after rinsing 30 the dissociated pulped fibers. Drying 34 can be performed using either air-drying or providing heat and/or forced air, as is known in the art.

The method 10 can also include testing 36 the clean fibers after drying 34 for metal analysis and/or other contaminate analysis to ensure levels of components other than fibers are at desired levels.

Advantageously, the clean fibers from method 10 can be used to manufacture an article from recycled fibers. An article using recycled clean fibers from method 10 discussed herein can be manufactured in the same fashion as articles manufactured from original fibers via methods known in the art. The clean fibers from method 10 that are being recycled can form 100% of the fibers of the article, or a lesser percentage of the fibers of the article.

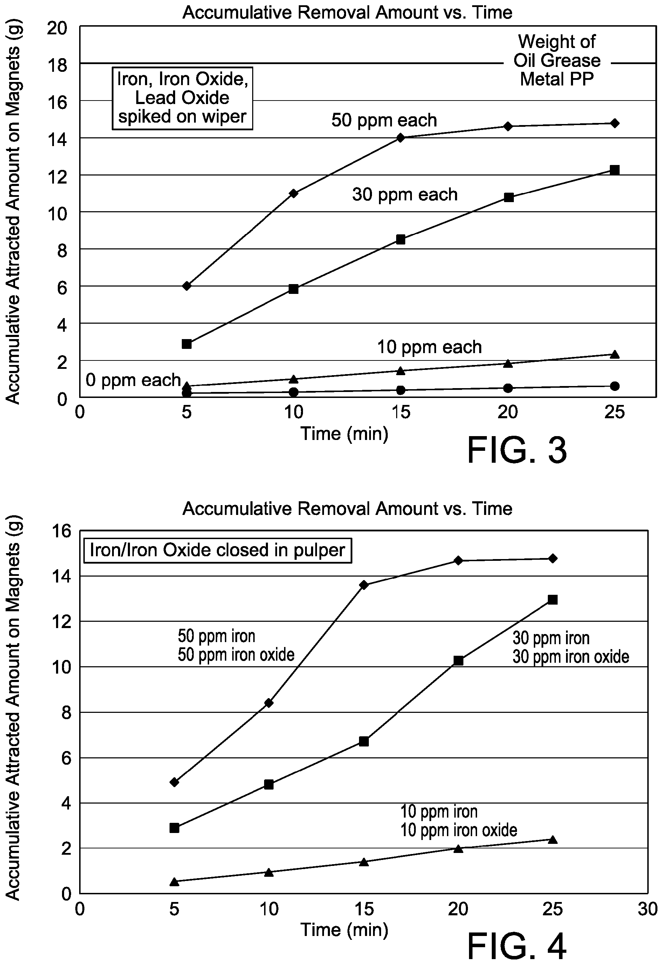

Turning now to FIGS. 3 and 4, it can be seen that preferable levels of added magnetic particles 18 can enhance the efficacy and efficiency of the method 10. FIG. 3 provides a representation of the accumulative attracted amount of contaminates, added magnetic particles, and fibers attracted to the magnet 24 as described above as removed from the magnet 24 when the magnet 24 was removed at intervals of 5, 10, 15, 20, and 25 minutes in the small scale testing that was conducted following method 10, and as described above. For FIG. 3, the magnetic particles were added 18 by being added directly to the wiper, also referred to as "spiked" on the wiper. In FIG. 3, the added magnetic particles 18 were iron, iron oxide, and lead oxide, with the various concentrations being noted as "ppm" for each of those specific magnetic particles. For example, for the data represented by "10 ppm," means the wipers were spiked with 10 ppm of iron, 10 ppm of iron oxide, and 10 ppm of lead oxide. FIG. 4 provides a similar representation of the accumulative attracted amount contaminates, added magnetic particles, and fibers versus time as FIG. 3 discussed above, except FIG. 4 displays the embodiment discussed above where the magnetic particles were added 18 to the solution prior to pulping 20 and not directly on to the wiper. In FIG. 4, the added magnetic particles 18 were iron and iron oxide, with the concentrations being noted as "ppm" for each of those specific magnetic particles as discussed above with respect to FIG. 3.

FIG. 3 illustrates that adding no magnetic particles ("0 ppm"), attracted less than 1.0 gram of contaminates and fibers on the magnet 24, and the "10 ppm" trial attracted only about 2 grams. However, each trials of "30 ppm" and "50 ppm" of added magnetic particles 18 provided much more efficient removal of contaminates, added magnetic particles, and fibers attracted to the magnet 24, with the "50 ppm" trial removing 26 approximately 15 grams of contaminates, added magnetic particles, and fibers after the fifth time of applying the magnetic field 22 and removing 26 the contaminates, added magnetic particles, and fibers, for a total time of 25 minutes. After such time, the original solution including the dissociated pulped fibers were visually more clear. The polypropylene fibers (as well as the contaminates attracted to them) were largely separated from the pulp fibers in the suspension 23 by being attracted to the magnet 24, just as the magnetic contaminates and the added magnetic particles 18 that attracted other contaminates such as oil and grease were attracted to the magnet 24.

Table 3, below, provides the various trials of "0 ppm" - "50 ppm" and the accumulative dry mass weights, including the accumulative mass removed by the magnet 24 after 25 minutes and the accumulative mass recovered from the suspension 23 by filtering 28 the remaining solution for the small scale testing conducted where the magnetic particles were added 18 directly to the wipers (see FIG. 3). It was theorized that 18 grams of contaminates, added magnetic particles, and polypropylene fibers could be attracted to the magnet 24 and approximately 12 grams of pulp fibers could be recovered. As shown in Table 3, the "50 ppm trial," the total accumulation of 14.92 grams on the magnet 24 is about 3 grams less than the expected total weight of the contaminates of oil/grease, added magnetic particles, and the polypropylene fibers, with the weight difference being mostly due to some oil staying with the solution from the pulping. The "30 ppm trial" was also relatively effective, providing an accumulative mass on the magnet 24 of 12.20 grams after 25 minutes.

**Table 3**

| Iron Powder (ppm) | Initial Mass of Used Wipes (Grams) | Accumulative Mass Removed by Magnet (Grams) | Accumulative Mass Recovered from solution (Grams) |
|---|---|---|---|
| Black Iron Oxide (ppm) | | | |
| Lead Oxide (ppm) | | | |
| 50 | 30 | 14.92 | 10.89 |
| 30 | 30 | 12.20 | 13.25 |
| 10 | 30 | 2.25 | 22.08 |
| 0 | 30 | 0.50 | 22.53 |

Reviewing FIG. 4 provides similar conclusions as can be drawn from FIG. 3. Particularly, it appears that the "30 ppm" and "50 ppm" trials of added magnetic particles 18 were effective at removing a substantial portion of the contaminates, added magnetic particles, and polypropylene fibers after 25 minutes.

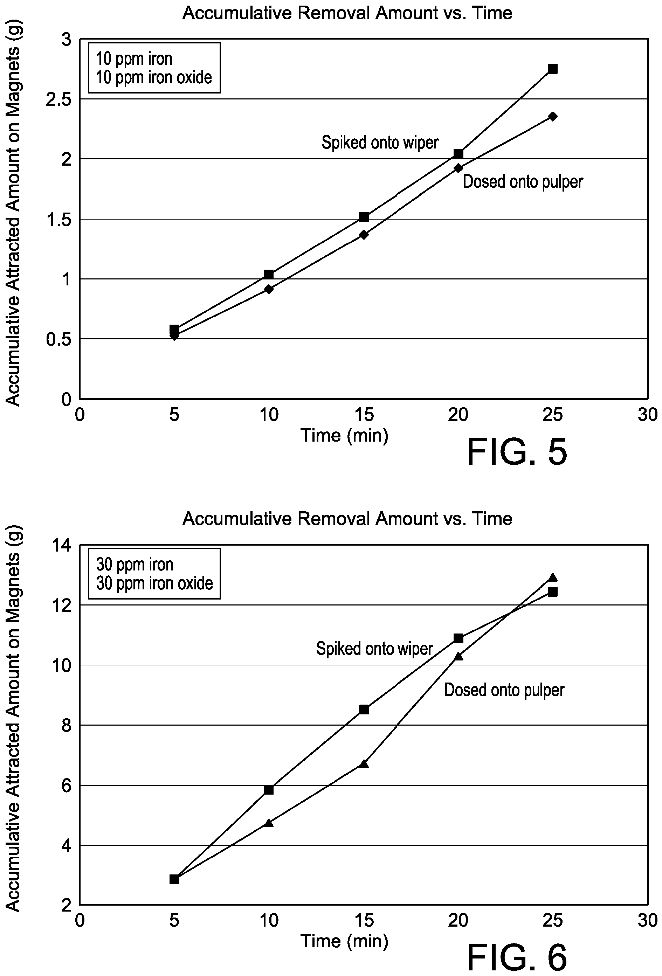

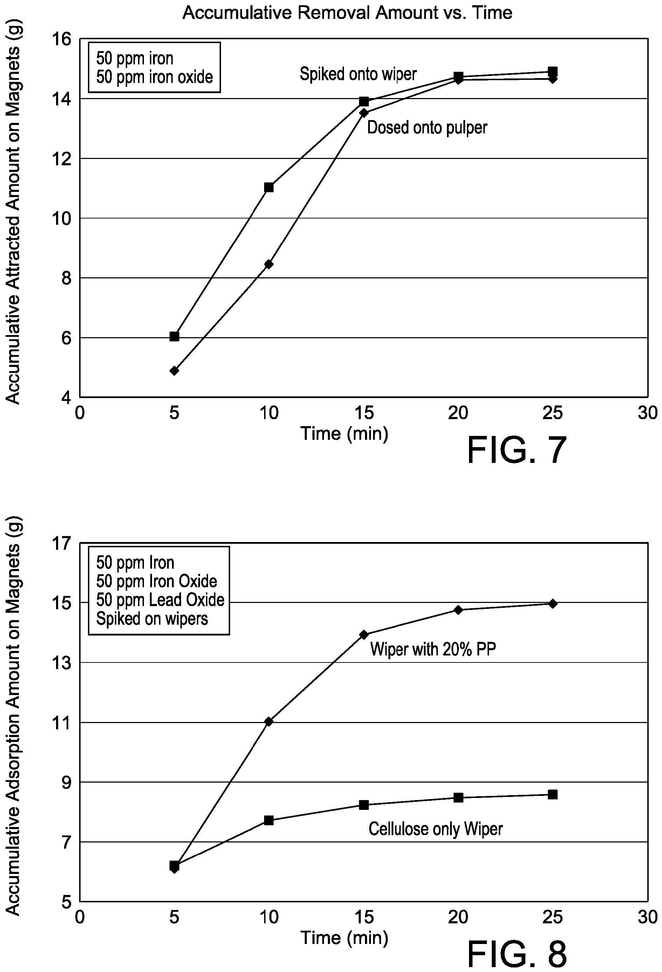

FIGS. 5-7 show the similarity in effectiveness of method 10 between the two different ways that the magnetic particles can be added 18 in method 10. FIG. 5 illustrates the accumulative removal amount of contaminates, added magnetic particles, and fibers attracted to the magnet 24 versus time comparing a wiper in a solution with magnetic particles added to the solution and a wiper in a solution with magnetic particles added directly to the wiper for 10 ppm of magnetic particles of iron and iron oxide. FIGS. 6 and 7 portray the same comparison, except for "30 ppm" and "50 ppm" trials, respectively, as discussed above. As seen from FIGS. 5-7, whether the magnetic particles are added 18 directly to the contaminated article(s) or to the solution in which the contaminated article(s) will be pulped 20, the effectiveness of the method 10 is substantially the same. Thus, the way in which the magnetic particles can be added 18 in method 10 provides flexibility for method 10 without sacrificing the efficacy of the method 10. For example, in some circumstances, adding the magnetic particles 18 may not be possible or practical directly to the wiper due to the wiper's performance considerations or potential manufacturing limitations. In such a circumstance, adding the magnetic particles 18 to the solution in which the wiper is pulped 20 can provide substantially similar effectiveness for method 10 as if the magnetic particles 18 were added directly on to the wiper.

The method 10 can be particularly efficient for cleaning non-woven articles that include hydrophobic fibers or filaments. As previously noted, method 10 can be utilized to clean the fibers or filaments from a non-woven article that includes hydrophobic fibers or filaments, such as polypropylene. If a contaminated article includes such hydrophobic fibers/filaments, the method 10 can essentially separate hydrophobic and hydrophilic fibers (e.g., the hydrophobic fibers can be attracted to the magnet 24 and the hydrophilic fibers remain in the solution), in addition to the advantage that the hydrophobic fibers or filaments can indirectly help to remove metal contaminates along with oil and/or grease. To demonstrate this efficiency, a comparison study was performed by testing method 10 for a wiper including only pulp fibers against a wiper including 80% pulp fibers and 20% polypropylene fibers. Each of the wipers had 50 ppm each of iron, iron oxide, and lead oxide added 18 directly to the wiper before pulping 20, as discussed above.

In this comparison, a difference between the two suspensions 23 created by pulping 20 was noticed. The suspension 23 including the wiper including the hydrophobic fibers (polypropylene) had conglomerates of contaminates formed on fibers in the suspension 23, whereas the suspension 23 from the pulp only wiper seemed to have the contaminates dispersed in the solution of water. As illustrated in FIG. 8, the wiper with the hydrophobic fibers (polypropylene fibers) realized an advantage in the accumulated amount of contaminates, added magnetic particles, and fibers that were attracted to the magnet 24. While it needs to be appreciated that the accumulated amount for the wiper including the polypropylene fibers includes the mass of polypropylene fibers themselves attracted to the magnet 24, the difference between the accumulated amount in each sample is not solely due to such fibers, as there are only about 3 grams of polypropylene fibers in the wiper, yet after 25 minutes the wiper with the polypropylene had over 6 grams more accumulated mass on the magnet 24. While the method 10 can be employed for any contaminated article, advantages may be realized for articles including hydrophobic fibers or filaments.

Method 10 can also be utilized for cleaning contaminated articles whether they were used for cleaning fresh oil, or used oil. Fresh oils and used oils can be different in terms of their viscosity as well as metal-related contaminate levels. For example, fresh oils can be more viscous and free from metal contaminates whereas used oils can be less viscous and may potentially include various metal contaminates. A comparison study was conducted to compare the effect of method 10 on wipers having used oil and wipers having fresh oil. The wipers each had a composition of 80% pulp fibers and 20% polypropylene fibers and had 50 ppm each of magnetic particles of iron, iron oxide, and lead oxide added 18 directly to the wiper. For the used oil wipers, a used oil/grease mixture was made that included about 12.0 grams of used motor oil and about 3.0 grams of Valvoline^{®} Moly-Fortified Multi-Purpose Grease, for an approximate 80/20 ratio of oil/grease. The used motor oil was collected by a motor repair/oil change shop and was used as received. For the fresh oil wiper, a fresh oil/grease mixture was made that included above 12.0 grams of fresh motor oil, Chevron^{®} Supreme SAE 30 motor oil and about 3.0 grams of Valvoline^{®} Moly-Fortified Multi-Purpose Grease, for an approximate 80/20 ratio of oil/grease.

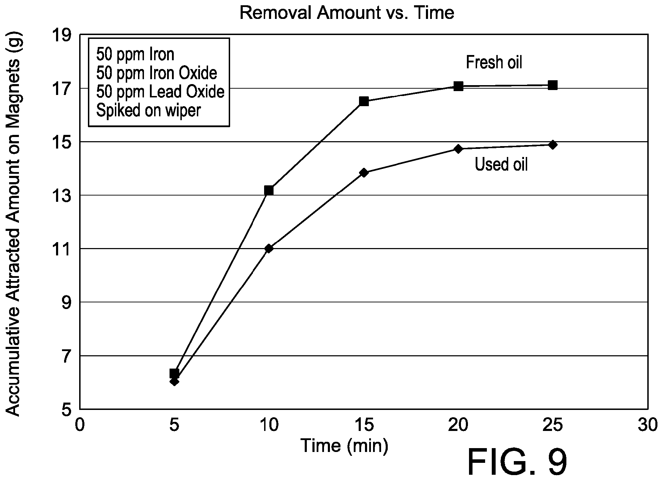

Each wiper was put through the method 10, and FIG. 9 illustrates the accumulated amount of contaminates, added magnetic particles, and fibers attracted to the magnet 24 at time intervals of 5, 10, 15, 20, and 25 minutes. Table 4 below also provides the total accumulated amount of contaminates, added magnetic particles, and fibers attracted to the magnet 24 after 25 minutes as well as the fibers recovered from the solution after pulping 20 and removing 26 the contaminates. If all the oil/grease mixture and all the polypropylene fibers were to be attracted to the magnet 24, then it would be expected that the accumulated mass would be about 18.0 grams, and the recovered pulp fibers would be expected to be about 12.0 grams if no pulp fibers were attracted to the magnet 24 and removed 26. As illustrated in FIG. 9 and in Table 4, the wipers with the fresh oil mixture provided more accumulation of contaminates, added magnetic particles, and fibers attracted to the magnet 24 than the wipers with the used oil, but the wipers with the fresh oil led to lower pulp fiber recovery. Despite these differences, the comparison study showed that the method 10 can be utilized for contaminated articles that have either or both fresh and used oil.

**Table 4**

| Iron Powder (50 ppm) | Removed by Magnets (Grams) | Recovered Fibers from Process Water (Grams) |
|---|---|---|
| Black Iron Oxide (50 ppm) | | |
| Wiper with Used Oil | 14.92 | 10.89 |
| Wiper with Fresh Oil | 17.25 | 9.81 |

Method 10 which relies on a magnetic approach of adding magnetic particles 18 and applying a magnetic field 22 to remove contaminates from a contaminate article(s) can have benefits as compared to other cleaning methodologies relying more so on chemical detergents. From a process quality control standpoint, the known amount of add-on of magnetically attractive particles can streamline the process with exact control parameters. Additionally, from a cleaning perspective, the magnetic removal of oil and grease can potentially simplify the recycling process and minimize the use of water and detergent. Additionally, the method 10 can allow for almost complete separation of polypropylene fibers (or other hydrophobic fibers) from pulp fibers that can provide recycling opportunities for polypropylene fibers (or other hydrophobic fibers) once cleaned from other contaminates. After the method 10 is complete, the added magnetic particles can be recovered and reused by burning off all organic components and then re-using the magnetic particles in the method 10 or for other purposes.

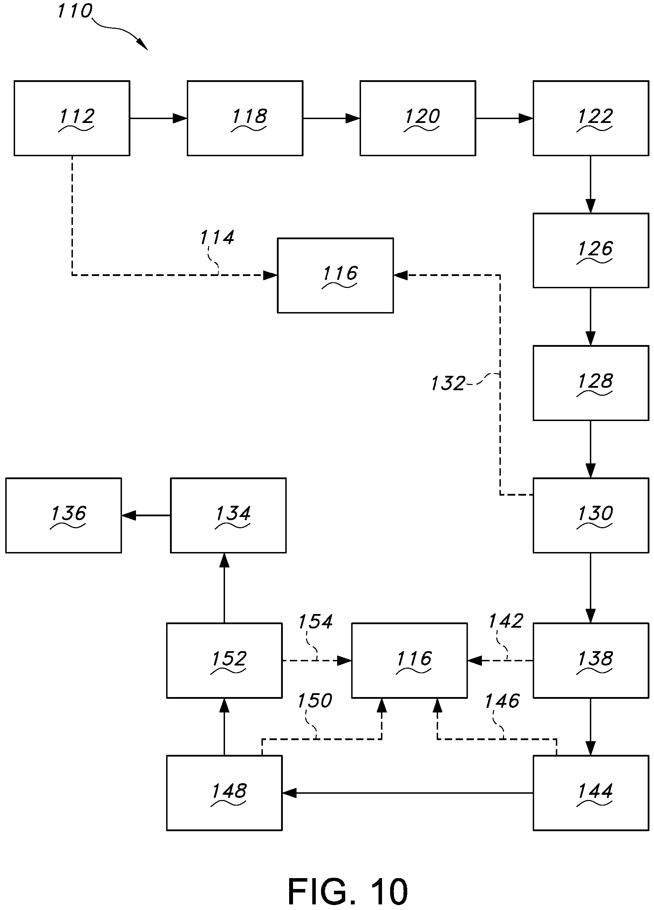

FIG. 10 provides an alternative method 110 for cleaning fibers from a contaminated article. Method 110 can include similarities from method 10 illustrated in FIG. 1 and discussed above, can include pre-pulping preparation 112, adding magnetic particles 118, pulping 120, applying a magnetic field 122, removing 126 contaminates, filtering 128 the dissociated pulped fibers, and rinsing 130 the dissociated pulped fibers.

The method 110 provides additional processes to help clean the dissociated pulped fibers if some contaminates still remain after pulping 120 and removing 126 some of the contaminates from the contaminated article(s). The method 110 can include washing 138 the dissociated pulped fibers of the contaminated article(s) to provide washed pulped fibers. After rinsing 130 the dissociated pulped fibers, the dissociated pulped fibers can be combined with a detergent and a solution to form a suspension. The suspension can be held within a container and the solution used during washing 138 can be water. For example, washing 138 can include combining the dissociated pulped fibers with a desired amount of detergent. In some implementations, the detergent can be moderated and applied in steps as described in the PCT patent application entitled "Method for Clean Fiber Recovery from Contaminated Articles," filed on July 15, 2016, by assignee Kimberly-Clark, the entire contents are hereby incorporated by reference. Washing 138 can include mixing the suspension that includes the dissociated pulped fibers and the detergent in the solution, for example, mixing with a mechanical mixer at a speed to effectively swirl and agitate the suspension in the container. In one embodiment, mixing can be performed using an IKA 50-2000 RPM variable speed mixer, although any equipment capable of adequately mixing the suspension can be used in the washing 138 of method 110.

In a preferred embodiment, the solution added to the suspension for washing 138 can be heated, and more particularly, it is preferable to heat the solution to at least about 50°C. Not to be bound by theory, but it is believed that heating the solution for washing 138 can help provide benefits to fibrous structure matrix of any dissociated pulped fibers that may still be entangled or woven, and can also increase the solubility as well as the dispensability of both organic and inorganic contaminates in the solution.

Sample detergents that can be used include detergents, surfactants, or surfactant combinations that are commonly used for oil and grease cleaning or in personal care hygiene and cleaning products. Such surfactant or surfactant combinations can be selected from any of the following exemplary surfactant families: anionic, cationic, carboxylic, zwitterionic, and non-ionic series of surfactants and their combinations. Specific examples include, but are not limited to tritons, sodium stearates, alkyl benzenesulfonates, lignin sulfonates, dipropylene glycol methyl ethers, and alcohol ethoyxlates.

Although the above mentioned surfactant types may all suitable for the washing 138 described herein, the cleaning efficacy and the amount used for reaching the said cleaning efficacy may vary based on the surfactant or detergent used. In some cases, cleaning temperature and cleaning time may also be different depending on the surfactant or detergent used. However, preferred surfactant systems that are suitable for the washing 138 described herein should be effective to handle heavy and sticky portions of oils and grease, which in some used wipers can be up to or even double the wiper's fiber weight (e.g., a 10 gram clean wiper may absorb/wipe up to 10-20 grams of oils/grease). The heavy and sticky portions of oils/grease often consist of high molecular weight hydrophobic polymers (e.g., polybutenes, silicones, polyurathanes, fluorocarbon polymers, etc.) that will require surfactants to have strong hydrophobic affinities to them. Accordingly, surfactant systems that have long hydrophobic side alkyl chains will generally perform better than others. One example of such surfactants include is a family of alcohol ethoxylates (AEs), in which a long side alkyl chain usually has 12 to 15 carbon atoms and also combined with some ethylene oxide units (3 to 14).

In one embodiment, a sample detergent that can be used in the washing 138 described herein is a mixture of alcohol ethoxylates (AEs) with C12-13 alkyl side chains and di-propylene glycol methyl ether at about ratios ranges of 1:5 to 1:40 (or generally referred it to Surfactant Chemistry A or SC A). Di-propylene glycol methyl ether is an organic solvent, but is fully soluble in water so that it can help further for breaking down "heavy & sticky" portions of oils/grease.

In some embodiments, the method 110 can include applying a magnetic field to the suspension when washing 138 the dissociated pulped fibers. It is preferable to use a magnetic field strength during washing 138 of at least about 5000 Gauss. The magnetic field can be created by at least one magnet (e.g., one or more bar type neodymium rare earth magnets). The magnet(s) used to provide the magnetic field during washing 138 are preferably placed in the container such that each of the magnets are at least partially submerged in the suspension. Preferably, the magnet(s) are disposed and held near the sides of the container, so as to avoid interference with the mixing of the suspension during washing 138. It is contemplated that the magnetic field could also be generated by providing an electromagnetic field as an alternative to, or in addition to, one or more magnets 24.

In some embodiments, when washing 138 the dissociated pulped fibers while applying a magnetic field to the suspension, contaminates can be further removed the suspension as part of the washing 138 of the dissociated pulped fibers. Additionally, some contaminates can begin to accumulate on the magnets due to the magnetic field being applied to the suspension when washing 138 the dissociated pulped fibers in the suspension. As discussed above with respect to method 10 and the applying of a magnetic field 22 to the dissociated pulped fibers, metal contaminates may be attracted to the magnets through their intrinsic magnetic properties, and the spunbond polypropylene fibers (or other hydrophobic fibers) can also be attracted to the magnets and attract oil/grease. As the contaminates accumulate on the magnet(s) (either directly to the magnet surface and/or indirectly via hydrophobic fibers that are attracted themselves to the magnets), the magnets can periodically be removed from the suspension and wiped to remove contaminates from the suspension.

Advantageously, applying a magnetic field while washing 138 the dissociated pulp fibers with detergent can remove a wide variety of contaminates from the suspension. As noted above, if the contaminates include metal or other particles having intrinsic magnetic properties, then the magnetic field being applied during washing 138 can attract not only such particles, but also hydrophobic fibers including contaminates. Therefore, even if the contaminated article(s) includes contaminates in which the substantial portion of contaminates do not include metal particles or particles having intrinsic magnetic properties (e.g., oil, grease, solvents, and lubricants), applying a magnetic field to the suspension during washing 138 can help to remove more contaminates than only using a detergent during washing 138. In some circumstances, the contaminated article(s) can include contaminates devoid of metal particles or particles having intrinsic magnetic properties (e.g., oil, grease, solvents, and lubricants), yet applying a magnetic field to the suspension while washing 138 can help to remove more contaminates than using only a detergent during washing 138.

The washing 138 of the dissociated pulped fibers can occur for a time period sufficient to wash the dissociated pulped fibers. In a preferred embodiment of method 110, the magnetic field can be applied to the suspension the majority of the time period that the washing 138 occurs. The contaminated solution 142 and detergent from the suspension after washing 138 can be put through a filtering mechanism and transferred to a waste-water facility 116 for further processing to remove the washed pulped fibers from the suspension.

After washing 138 the dissociated pulped fibers to provide washed pulped fibers, the method 110 can preferably include rinsing 144 the washed pulped fibers to remove excess detergent used in the washing 138 of the dissociated pulped fibers discussed above. The rinsing 144 can also provide the benefit of removing any contaminates confined in the washed pulped fibers that were not transferred in the contaminated solution 142 to the waste-water facility 116. As illustrated in FIG. 10, the rinsing solution 146 can also be transferred to a waste-water facility 116 for further processing. In some embodiments, it may be preferable to perform the rinsing 144 several times.

In some embodiments, the method 110 can include treating 148 the washed pulped fibers with a pH adjustment solution to provide treated pulped fibers. Treating 148 the washed pulped fibers can occur after the washed pulped fibers are removed from the wash box used in rinsing 144 the washed pulped fibers if rinsing 144 occurred. Alternatively, the treating 148 can occur in the same wash box used in rinsing 130 the washed pulped fibers. Treating 148 the washed pulped fibers in a pH adjustment solution can further remove metal contaminates, especially homogeneous metal ions and pH sensitive metal oxides and other metal compounds that can become soluble in a pH adjustment solution.

In one embodiment, the pH adjustment solution can include a simple acid such as adding pre-made solutions of hydrochloric acid, sulfuric acid, and/or other pH adjustment agents such as uronium hydrogen sulfate, an acid-base adduct of urea and sulfuric acid. The uranium hydrogen sulfate can further enhance the removal of contaminates as it can also function as a chelation agent to metal ions. The chelation can bring more ions from pulped fibers to water solutions so that they can be removed from fibers. In another aspect, it can be expected that residual uronium hydrogen sulfate left in recycled fibers may have some antimicrobial activity, which may be beneficial to recycling pulp fibers as mold growth can be prohibited.

Treating 148 the washed pulped fibers with a pH adjustment solution to provide treated pulped fibers can be include adding the washed pulped fibers to a pH adjustment solution created by mixing twelve liters of water and adjusting the pH to about 2.0 to about 2.5 by adding a solution including uranium hydrogen sulfate. The pH adjustment solution can be heated (preferably to at least about 50°C), and in the small scale testing conducted, was heated to about 60°C to about 65°C. The washed pulped fibers can mixed for approximately thirty minutes with the aid of a variable RPM Lightening Mixer. The used pH adjustment solution 150 can be put through a filtering mechanism and directed to a waste-water treatment facility 116 for further processing.

If the method 110 includes treating 148 the washed pulped fibers with a pH adjustment solution, the method 110 can also preferably include rinsing 152 the treated pulped fibers. Similar to the discussion above regarding rinsing 144 the washed pulped fibers after washing 138, rinsing 152 the treated pulped fibers can occur in a wash box with the assistance of a vacuum. The rinsed solution 154 from rinsing the treated pulped fibers can be directed to a waste-water treatment facility 116 for further processing.

The method 110 can also include drying 134 the pulped fibers to provide clean fibers, similar to drying 34 of method 10 discussed above. Additionally, the method 110 can also include testing 136 the clean fibers after drying 134 for metal analysis and/or other contaminate analysis to ensure levels of components other than fibers are at desired levels.

## Claims

1. A method for cleaning fibers from a contaminated article, the method comprising:
providing a contaminated article comprising contaminates and at least one of fibers and filaments, wherein the contaminated article is a non-woven article comprising pulp fibers and at least one of polymeric fibers and polymeric filaments, and wherein the contaminates are selected from the group consisting of oils, greases, solvents, and lubricants;
adding a plurality of magnetic particles to a first solution;
pulping the contaminated article to separate the at least one of fibers and filaments from the contaminated article to provide dissociated pulped fibers, wherein pulping the contaminated article to separate the at least one of fibers and filaments from the contaminated article to provide dissociated pulped fibers occurs in the first solution after the plurality of magnetic particles are added to the first solution;
applying a magnetic field to the suspension including the dissociated pulped fibers;
removing at least some of the plurality of magnetic particles and at least some of the contaminates from the suspension; and
drying the dissociated pulped fibers to provide clean fibers.

2. A method for cleaning fibers from a contaminated article, the method comprising:
providing a contaminated article comprising contaminates and at least one of fibers and filaments, wherein the contaminated article is a non-woven article comprising pulp fibers and at least one of polymeric fibers and polymeric filaments, and wherein the contaminates are selected from the group consisting of oils, greases, solvents, and lubricants;
adding a plurality of magnetic particles to the contaminated article;
pulping the contaminated article including the plurality of magnetic particles to separate the at least one of fibers and filaments from the contaminated article in a first solution to provide dissociated pulped fibers in a suspension;
applying a magnetic field to the suspension including the dissociated pulped fibers;
removing at least some of the plurality of magnetic particles and at least some of the contaminates from the suspension; and
drying the dissociated pulped fibers to provide clean fibers.

3. The method of claim 1, wherein the plurality of magnetic particles are added to the first solution at a concentration of at least about 5 ppm such as wherein the plurality of magnetic particles are added to the first solution at a concentration of at least about 30 ppm; and/or wherein the plurality of magnetic particles comprises at least one of iron particles and iron oxide particles.

4. The method of any preceding claim, wherein the magnetic field applied to the dissociated pulped fibers is provided by at least one magnet, optionally wherein the at least one magnet is a rare earth bar magnet, and wherein applying the magnetic field to the suspension includes at least partially submerging the at least one magnet in the first solution, optionally wherein removing at least some of the plurality of magnetic particles and at least some of the contaminates from the suspension comprises removing the at least one magnet from the first solution, and optionally further comprising:
removing fibers or particles from a surface of the at least one magnet after removing the at least one magnet from the first solution; and
reapplying the magnetic field to the pulped fibers.

5. The method of any preceding claim, further comprising:
providing a plurality of magnetic fields, each of the plurality of magnetic fields being provided by a magnet; and
applying the plurality of magnetic fields to the suspension including the dissociated pulped fibers by submerging at least a portion of each of the magnets in the first solution.

6. The method of any preceding claim, wherein the magnetic field applied to the suspension is at least about 5000 Gauss; and/or wherein the first solution is heated to at least about 50° Celsius.

7. The method of any preceding claim, further comprising:
pre-washing the contaminated article in a pre-washing solution prior to pulping the contaminated article.

8. The method of any preceding claim, further comprising:
rinsing the dissociated pulped fibers after removing at least some of the plurality of magnetic particles and at least some of the contaminates from the suspension.

9. The method of any preceding claim, further comprising:
washing the dissociated pulped fibers after removing at least some of the plurality of magnetic particles and at least some of the contaminates from the suspension, the washing of the dissociated pulped fibers comprising:
providing a second solution including a detergent; and
agitating the dissociated pulped fibers in the second solution including the detergent, optionally further comprising:
filtering the dissociated pulped fibers from the first solution and prior to providing the dissociated pulped fibers to the second solution including the detergent for washing the dissociated pulped fibers.

10. The method of claim 9, further comprising:
treating the dissociated pulped fibers with a pH adjustment solution after washing the dissociated pulped fibers to provide treated pulped fibers; and
rinsing the treated pulped fibers, optionally wherein the pH adjustment solution is heated to at least about 50° Celsius.

11. The method of any preceding claim, wherein the at least one of the polymeric fibers and polymeric filaments are hydrophobic, optionally wherein the at least one of the polymeric fibers and polymeric filaments is comprised of polypropylene.

12. The method of any preceding claim, wherein a plurality of contaminated articles are cleaned simultaneously.

13. A method for manufacturing an article from recycled fibers, wherein the clean fibers from the method according to any preceding claim are used in the manufacturing of the article.

## Patentansprüche

1. Verfahren zum Reinigen von Fasern aus einem verunreinigten Artikel, das Verfahren umfassend:
Bereitstellen eines verunreinigten Artikels, der Verunreinigungen und mindestens eines von Fasern und Filamenten umfasst, wobei der verunreinigte Artikel ein Vliesartikel ist, der Zellstofffasern und mindestens eines von Polymerfasern und Polymerfilamenten umfasst, und wobei die Verunreinigungen aus der Gruppe bestehend aus Ölen, Fetten, Lösungsmitteln und Schmiermitteln ausgewählt sind;
Hinzufügen einer Vielzahl von magnetischen Partikeln zu einer ersten Lösung;
Aufschließen des verunreinigten Artikels, um das mindestens eine von Fasern und Filamenten von dem verunreinigten Artikel zu trennen, um dissoziierte aufgeschlossene Fasern bereitzustellen, wobei das Aufschließen des verunreinigten Artikels, um das mindestens eine von Fasern und Filamenten von dem verunreinigten Artikel zu trennen, um dissoziierte aufgeschlossene Fasern bereitzustellen, in der ersten Lösung erfolgt, nachdem die Vielzahl von magnetischen Partikeln zu der ersten Lösung hinzugefügt wurde;
Anlegen eines Magnetfelds an die Suspension, welche die dissoziierten aufgeschlossenen Fasern beinhaltet;
Entfernen von mindestens einigen der Vielzahl von magnetischen Partikeln und mindestens einigen der Verunreinigungen aus der Suspension; und
Trocknen der dissoziierten aufgeschlossenen Fasern, um saubere Fasern bereitzustellen.

2. Verfahren zum Reinigen von Fasern aus einem verunreinigten Artikel, das Verfahren umfassend:
Bereitstellen eines verunreinigten Artikels, der Verunreinigungen und mindestens eines von Fasern und Filamenten umfasst, wobei der verunreinigte Artikel ein Vliesartikel ist, der Zellstofffasern und mindestens eines von Polymerfasern und Polymerfilamenten umfasst, und wobei die Verunreinigungen aus der Gruppe bestehend aus Ölen, Fetten, Lösungsmitteln und Schmiermitteln ausgewählt sind;
Hinzufügen einer Vielzahl von magnetischen Partikeln zu dem verunreinigten Artikel;
Aufschließen des verunreinigten Artikels, der die Vielzahl von magnetischen Partikeln beinhaltet, um das mindestens eine von Fasern und Filamenten von dem verunreinigten Artikel in einer ersten Lösung zu trennen, um dissoziierte aufgeschlossene Fasern in einer Suspension bereitzustellen;
Anlegen eines Magnetfelds an die Suspension, welche die dissoziierten aufgeschlossenen Fasern beinhaltet;
Entfernen von mindestens einigen der Vielzahl von magnetischen Partikeln und mindestens einigen der Verunreinigungen aus der Suspension; und
Trocknen der dissoziierten aufgeschlossenen Fasern, um saubere Fasern bereitzustellen.

3. Verfahren nach Anspruch 1, wobei die Vielzahl von magnetischen Partikeln der ersten Lösung in einer Konzentration von mindestens etwa 5 ppm hinzugefügt wird, wie beispielsweise wobei die Vielzahl von magnetischen Partikeln der ersten Lösung in einer Konzentration von mindestens etwa 30 ppm hinzugefügt wird; und/oder wobei die Vielzahl von magnetischen Partikeln mindestens eines von Eisenpartikeln und Eisenoxidpartikeln umfasst.

4. Verfahren nach einem der vorhergehenden Ansprüche, wobei das an die dissoziierten aufgeschlossenen Fasern angelegte Magnetfeld durch mindestens einen Magneten bereitgestellt wird, optional, wobei der mindestens eine Magnet ein Seltene-Erden-Stabmagnet ist, und wobei das Anlegen des Magnetfelds an die Suspension ein mindestens teilweises Eintauchen des mindestens einen Magneten in die erste Lösung beinhaltet, optional, wobei das Entfernen von mindestens einigen der Vielzahl von magnetischen Partikeln und mindestens einigen der Verunreinigungen aus der Suspension ein Entfernen des mindestens einen Magneten aus der ersten Lösung umfasst, und optional ferner umfassend:
Entfernen von Fasern oder Partikeln von einer Oberfläche des mindestens einen Magneten nach dem Entfernen des mindestens einen Magneten aus der ersten Lösung; und
erneutes Anlegen des Magnetfelds an die aufgeschlossenen Fasern.

5. Verfahren nach einem der vorhergehenden Ansprüche, ferner umfassend:
Bereitstellen einer Vielzahl von Magnetfeldern, wobei jedes der Vielzahl von Magnetfeldern durch einen Magneten bereitgestellt wird; und
Anlegen der Vielzahl von Magnetfeldern an die Suspension, welche die dissoziierten aufgeschlossenen Fasern beinhaltet, durch Eintauchen mindestens eines Abschnitts jedes der Magnete in die erste Lösung.

6. Verfahren nach einem der vorhergehenden Ansprüche, wobei das an die Suspension angelegte Magnetfeld mindestens etwa 5000 Gauß beträgt; und/oder wobei die erste Lösung auf mindestens etwa 50° Celsius erwärmt wird.

7. Verfahren nach einem der vorhergehenden Ansprüche, ferner umfassend:
Vorwaschen des verunreinigten Artikels in einer Vorwaschlösung vor dem Aufschließen des verunreinigten Artikels.

8. Verfahren nach einem der vorhergehenden Ansprüche, ferner umfassend:
Spülen der dissoziierten aufgeschlossenen Fasern nach dem Entfernen von mindestens einigen der Vielzahl von magnetischen Partikeln und mindestens einigen der Verunreinigungen aus der Suspension.

9. Verfahren nach einem der vorhergehenden Ansprüche, ferner umfassend:
Waschen der dissoziierten aufgeschlossenen Fasern nach dem Entfernen von mindestens einigen der Vielzahl von magnetischen Partikeln und mindestens einigen der Verunreinigungen aus der Suspension, wobei das Waschen der dissoziierten aufgeschlossenen Fasern umfasst:
Bereitstellen einer zweiten Lösung, die ein Detergens beinhaltet; und
Rühren der dissoziierten aufgeschlossenen Fasern in der zweiten Lösung, die das Detergens beinhaltet, optional ferner umfassend:
Filtern der dissoziierten aufgeschlossenen Fasern aus der ersten Lösung und vor dem Bereitstellen der dissoziierten aufgeschlossenen Fasern an die zweite Lösung, die das Detergens beinhaltet, zum Waschen der dissoziierten aufgeschlossenen Fasern.

10. Verfahren nach Anspruch 9, ferner umfassend:
Behandeln der dissoziierten aufgeschlossenen Fasern mit einer pH-Einstellungslösung nach dem Waschen der dissoziierten aufgeschlossenen Fasern, um behandelte aufgeschlossene Fasern bereitzustellen; und
Spülen der behandelten aufgeschlossenen Fasern, optional, wobei die pH-Einstellungslösung auf mindestens etwa 50° Celsius erwärmt wird.

11. Verfahren nach einem der vorhergehenden Ansprüche, wobei das mindestens eine von Polymerfasern und Polymerfilamenten hydrophob ist, optional, wobei das mindestens eine von Polymerfasern und Polymerfilamenten aus Polypropylen besteht.

12. Verfahren nach einem der vorhergehenden Ansprüche, wobei eine Vielzahl von verunreinigten Artikeln gleichzeitig gereinigt wird.

13. Verfahren zum Herstellen eines Artikels aus recycelten Fasern, wobei die sauberen Fasern aus dem Verfahren nach einem der vorhergehenden Ansprüche bei dem Herstellen des Artikels verwendet werden.

## Revendications

1. Procédé de nettoyage de fibres d'un article contaminé, le procédé comprenant :
la fourniture d'un article contaminé comprenant des contaminants et au moins les uns parmi des fibres et des filaments, dans lequel l'article contaminé est un article non tissé comprenant des fibres de pâte et au moins les uns parmi des fibres polymères et des filaments polymères, et dans lequel les contaminants sont choisis dans le groupe constitué des huiles, des graisses, des solvants et des lubrifiants ;
l'ajout d'une pluralité de particules magnétiques à une première solution ;
la réduction en pâte de l'article contaminé pour séparer les au moins uns parmi les fibres et les filaments de l'article contaminé pour fournir des fibres dissociées en pâte, dans lequel la réduction en pâte de l'article contaminé pour séparer les au moins uns parmi les fibres et les filaments de l'article contaminé pour fournir des fibres dissociées en pâte se produit dans la première solution après que la pluralité de particules magnétiques ont été ajoutées à la première solution ;
l'application d'un champ magnétique à la suspension comprenant les fibres dissociées en pâte ;
l'élimination d'au moins certaines de la pluralité de particules magnétiques et d'au moins certains des contaminants de la suspension ; et
le séchage des fibres dissociées en pâte pour fournir des fibres propres.

2. Procédé de nettoyage de fibres d'un article contaminé, le procédé comprenant :
la fourniture d'un article contaminé comprenant des contaminants et les au moins uns parmi des fibres et des filaments, dans lequel l'article contaminé est un article non tissé comprenant des fibres de pâte et les au moins uns parmi des fibres polymères et des filaments polymères, et dans lequel les contaminants sont choisis dans le groupe constitué des huiles, des graisses, des solvants et des lubrifiants ;
l'ajout d'une pluralité de particules magnétiques à l'article contaminé ;
la réduction en pâte de l'article contaminé comprenant la pluralité de particules magnétiques pour séparer les au moins uns parmi les fibres et les filaments de l'article contaminé dans une première solution pour fournir des fibres dissociées en pâte dans une suspension ;
l'application d'un champ magnétique à la suspension comprenant les fibres dissociées en pâte ;
l'élimination d'au moins certaines de la pluralité de particules magnétiques et d'au moins certains des contaminants de la suspension ; et
le séchage des fibres dissociées en pâte pour fournir des fibres propres.

3. Procédé selon la revendication 1, dans lequel la pluralité de particules magnétiques est ajoutée à la première solution à une concentration d'au moins environ 5 ppm, par exemple dans lequel la pluralité de particules magnétiques est ajoutée à la première solution à une concentration d'au moins environ 30 ppm ; et/ou dans lequel la pluralité de particules magnétiques comprend au moins les unes parmi des particules de fer et de particules d'oxyde de fer.

4. Procédé selon l'une quelconque des revendications précédentes, dans lequel le champ magnétique appliqué aux fibres dissociées en pâte est fourni par au moins un aimant, facultativement dans lequel l'au moins un aimant est une barre aimantée en terre rare, et dans lequel l'application du champ magnétique à la suspension comporte l'immersion au moins partielle de l'au moins un aimant dans la première solution, facultativement dans lequel l'élimination d'au moins certaines de la pluralité de particules magnétiques et d'au moins certains des contaminants de la suspension comprend l'élimination de l'au moins un aimant de la première solution, et comprenant en outre facultativement :
l'élimination de fibres ou particules d'une surface de l'au moins un aimant après l'élimination de l'au moins un aimant de la première solution ; et
la réapplication du champ magnétique aux fibres réduites en pâte.

5. Procédé selon l'une quelconque des revendications précédentes, comprenant en outre :
la fourniture d'une pluralité de champs magnétiques, chacun de la pluralité de champs magnétiques étant fournie par un aimant ; et
l'application de la pluralité de champs magnétiques à la suspension comprenant les fibres dissociées en pâte par immersion de l'au moins une portion de chacun des aimants dans la première solution.

6. Procédé selon l'une quelconque des revendications précédentes, dans lequel le champ magnétique appliqué à la suspension est d'au moins environ 5 000 Gauss ; et/ou dans lequel la première solution est chauffée jusqu'à au moins environ 50° Celsius.

7. Procédé selon l'une quelconque des revendications précédentes, comprenant en outre :
le prélavage de l'article contaminé dans une solution de prélavage avant la réduction en pâte de l'article contaminé.

8. Procédé selon l'une quelconque des revendications précédentes, comprenant en outre :
le rinçage des fibres dissociées en pâte après l'élimination d'au moins certaines de la pluralité de particules magnétiques et d'au moins certains des contaminants de la suspension.

9. Procédé selon l'une quelconque des revendications précédentes, comprenant en outre :
le lavage des fibres dissociées en pâte après l'élimination d'au moins certaines de la pluralité de particules magnétiques et d'au moins certains des contaminants de la suspension, le lavage des fibres dissociées en pâte comprenant :
la fourniture d'une deuxième solution comprenant un détergent ; et
l'agitation des fibres dissociées en pâte dans la deuxième solution comprenant le détergent, comprenant en outre facultativement :
la filtration des fibres dissociées en pâte de la première solution et avant de fournir les fibres dissociées en pâte à la deuxième solution comprenant le détergent pour laver les fibres dissociées en pâte.

10. Procédé selon la revendication 9, comprenant en outre :
le traitement des fibres dissociées en pâte avec une solution d'ajustement de pH après lavage des fibres dissociées en pâte pour fournir des fibres réduites en pâte traitées ; et
le rinçage des fibres réduites de pâte traitées, facultativement dans lequel la solution d'ajustement de pH est chauffée jusqu'à au moins environ 50° Celsius.

11. Procédé selon l'une quelconque des revendications
précédentes, dans lequel les au moins uns parmi les fibres polymères et filaments polymères sont hydrophobes, facultativement dans lequel les au moins uns parmi les fibres polymères et filaments polymères sont constitués de polypropylène.

12. Procédé selon l'une quelconque des revendications
précédentes, dans lequel une pluralité d'articles contaminés sont nettoyés simultanément.

13. Procédé de fabrication d'un article à partir de fibres recyclées, dans lequel les fibres propres provenant du procédé selon l'une quelconque des revendications précédentes sont utilisées dans la fabrication de l'article.
